# EUROPEAN PATENT SPECIFICATION

(11) **EP 4 163 426 B1**
(45) Date of publication and mention of the grant of the patent: **21.05.2025**
(21) Application number: 21821463.3
(22) Date of filing: 01.06.2021
(51) Int. Cl.: D02J 1/18, B29B 11/16, D06H 7/04, D06M 15/59, B29K 105/14, D06M 101/40, B29B 15/12, D01D 5/42, D01F 9/12, D02J 13/00, D02J 1/22, D06M 15/55, D06M 15/564, D06M 15/643

(54) **METHOD FOR PRODUCING CARBON FIBER BUNDLE WITH SLIT, CARBON FIBER PACKAGE, AND METHOD FOR PRODUCING CARBON FIBER PACKAGE**
VERFAHREN ZUR HERSTELLUNG EINES KOHLENSTOFFFASERBÜNDELS MIT SCHLITZ, KOHLENSTOFFFASERPAKET UND VERFAHREN ZUR HERSTELLUNG EINES KOHLENSTOFFFASERPAKETS
PROCÉDÉ DE PRODUCTION D'UN FAISCEAU DE FIBRES DE CARBONE AVEC FENTE, ENROULEMENT DE FIBRES DE CARBONE ET PROCÉDÉ DE PRODUCTION D'UN ENROULEMENT DE FIBRES DE CARBONE

(30) Priority: 09.06.2020 JP 2020099997
(43) Date of publication of application: 12.04.2023
(73) Proprietor: Mitsubishi Chemical Corporation, Chiyoda-ku Tokyo 100-8251 (JP)
(72) Inventor: OKAMOTO, Satoshi, Tokyo 100-8251 (JP); MIZUTORI, Yukihiro, Tokyo 100-8251 (JP); KANEHAGI, Junji, Tokyo 100-8251 (JP)
(74) Representative: Hoffmann Eitle
(86) International application number: PCT/JP2021/020779
(87) International publication number: WO 2021/251205

(56) References cited:
- WO-A1-2017/221658
- WO-A1-2019/058910
- WO-A1-2020/066275
- WO-A1-2020/080238
- WO-A1-2020/158496
- JP-A- 2010 163 536
- JP-A- 2011 006 833
- JP-A- 2011 241 494
- JP-A- 2018 076 620
- JP-A- H04 317 962

## Description

### [Technical Field]

The present invention relates to a carbon fiber package and a method for manufacturing a carbon fiber package.

Priority is claimed on Japanese Patent Application No. 2020-099997, filed June 9, 2020.

### [Background Art]

Carbon fiber reinforced plastic (CFRP) which is a composite material comprising a carbon fiber and a resin has been widely used for components of aircraft, automobiles, ships, and other various transportation vehicles, sports goods, and leisure goods.

Certain kinds of CFRP products are molded from a sheet molding compound (SMC) by a compression molding method.

SMC is a kind of carbon fiber prepreg and has a structure in which a mat comprising a chopped carbon fiber bundle is impregnated with a resin composition.

The CFRP has higher strength when reinforced with a carbon fiber bundle having a smaller filament number, while a carbon fiber bundle having a smaller filament number (a smaller tow size) is more expensive to manufacture (US 2012/0213997 A1).

In order to manufacture SMC comprising a chopped carbon fiber bundle with a small filament number at low cost, a method including preparing, as a starting material, a carbon fiber bundle with a large filament number which is classified as a large tow and using it after spreading and subsequent slitting has been proposed (WO 2017/221658).

WO 2020/066275 A1 is further prior art.

### [Summary of Invention]

### [Technical Problem]

A main object of the present invention is to provide an improvement in a method for manufacturing a slit carbon fiber bundle, a carbon fiber package, or a method for manufacturing a carbon fiber package.

### [Solution to Problem]

The present invention is defined by the carbon fiber package according to the features of independent claim 1 and the method for manufacturing a carbon fiber package according to the features of independent claim 5. Optional features are recited in the dependent claims.

According to the invention, a carbon fiber package in which a slit carbon fiber bundle, which has been split into sub-bundles by partial slitting, is traverse-wound on a bobbin,
wherein the slit carbon fiber bundle has been prepared by partially slitting a single-sided coated carbon fiber bundle comprising a flat carbon fiber bundle and a resin film formed on one surface of the flat carbon fiber bundle, and
a width of the slit carbon fiber bundle on the bobbin is less than a sum of widths of the sub-bundles.

According to a particular embodiment, the slit carbon fiber bundle is wound on the bobbin such that no gap is present between the sub-bundles.

According to a particular embodiment, the resin film is a discontinuous film.

According to a particular embodiment, a filament number of the flat carbon fiber bundle is 12K or more, 20K or more, 30K or more, 40K or more, 45K or more, or 50K or more and may be 100K or less or 75K or less.

According to the previous embodiment, the filament number of the flat carbon fiber bundle is 40K or more.

According to a particular embodiment, when a filament number of the flat carbon fiber bundle is NK, and the number of the sub-bundles is n, N/n is 10 or less, 6 or less, 4 or less, 3 or less, or 2 or less.

According to a particular embodiment,
N/n is 0.5 or more or 1 or more.

According to a particular embodiment, wherein the resin film comprises an epoxy resin.

According to the invention, a method for manufacturing a carbon fiber package, comprising:
traverse-winding a slit carbon fiber bundle, which has been split into sub-bundles by partial slitting, on a bobbin,
wherein the slit carbon fiber bundle has been prepared by partially slitting a single-sided coated carbon fiber bundle comprising a flat carbon fiber bundle and a resin film formed on one surface of the flat carbon fiber bundle, and
the slit carbon fiber bundle is wound on the bobbin such that a width of the slit carbon fiber bundle on the bobbin is less than a sum of widths of the sub-bundles.

In a particular embodiment, the slit carbon fiber bundle is wound on the bobbin such that no gap is present between the sub-bundles.

In a particular embodiment, the resin film is a discontinuous film.

In a particular embodiment, a filament number of the flat carbon fiber bundle is 12K or more, 20K or more, 30K or more, 40K or more, 45K or more, or 50K or more and may be 100K or less or 75K or less.

According to the previous embodiment, the filament number of the flat carbon fiber bundle is 40K or more.

In a particular embodiment, when a filament number of the flat carbon fiber bundle is NK, and the number of the sub-bundles is n, N/n is 10 or less, 6 or less, 4 or less, 3 or less, or 2 or less.

In a particular embodiment, N/n is 0.5 or more or 1 or more.

In a particular embodiment, the resin film comprises an epoxy resin.

### [Advantageous Effects of Invention]

According to the present invention, an improvement in a method for manufacturing a slit carbon fiber bundle, a carbon fiber package, or a method for manufacturing a carbon fiber package is provided.

### [Brief Description of Drawings]

Fig. 1 is a conceptual view showing a slitting device.
Fig. 2 is a cross-sectional view of a single-sided coated carbon fiber bundle.
Fig. 3A is a plan view of a slit carbon fiber bundle.
Fig. 3B is a cross-sectional view of the slit carbon fiber bundle shown in Fig. 3A.
Fig. 4 is a cross-sectional view of a slit carbon fiber bundle on a bobbin, showing a cross section perpendicular to a fiber direction.
Fig. 5 is a plan view of a slit carbon fiber bundle.
Fig. 6 is a schematic view of an SMC manufacturing apparatus.
Fig. 7 is a schematic view of an example of a rotating body of a disperser.
Fig. 8 is a schematic view of an example of a rotating body of a disperser.

### [Description of Embodiments]

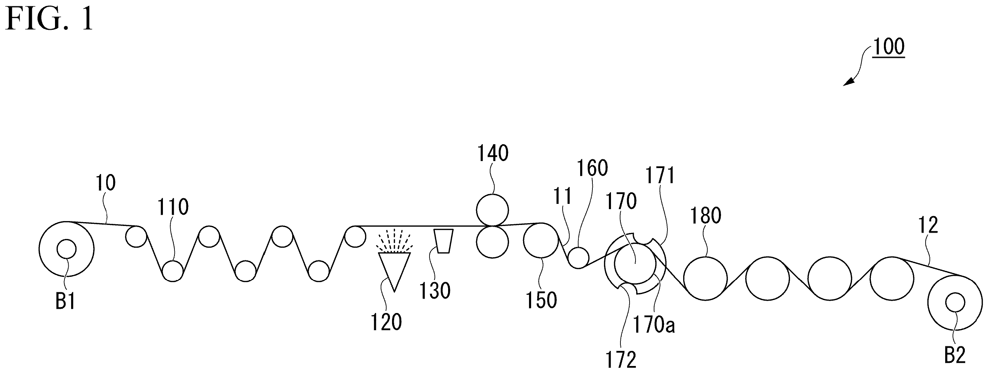

A method for manufacturing a slit carbon fiber bundle according to an embodiment can be carried out by using a slitting device of which conceptual view is shown in Fig. 1.

A method for manufacturing a slit carbon fiber bundle according to the embodiment will be described below using a case of using a slitting device 100 shown in Fig.1 as an example.

A carbon fiber bundle 10 with a filament number of NK is used as a starting material.

NK denotes N × 1000. For example, 15000 is expressed as 15K, and 50000 is expressed as 50K.

N is usually 12 or more, preferably 20 or more, and more preferably 30 or more and may be 40 or more, 45 or more, or 50 or more. N is not limited to, but is usually 100 or less and may be 75 or less, 60 or less, or 55 or less.

The above-described upper limit and lower limit can be arbitrarily combined. For example, the filament number of a flat carbon fiber bundle used as a raw material in the manufacturing method of the present embodiment is preferably 20K to 100K, more preferably 40K to 75K, still more preferably 45K to 60K, and particularly preferably 50K to 55K.

The carbon fiber bundle 10 is drawn out from a supply bobbin B1.

After drawn out from the supply bobbin B1, the carbon fiber bundle 10 is spread by being rubbed against a spreader bar 110.

The spreader bar 110 can be heated or vibrated arbitrarily with reference to known techniques as appropriate.

The carbon fiber bundle 10 may be spread by using high pressure air in place of or in addition to use of the spreader bar.

The carbon fiber bundle 10 originally has a flat shape, and thus the width thereof is further increased and the thickness thereof is further decreased when the carbon fiber bundle is spread. The thickness of the carbon fiber bundle 10 after the spreading is not limited, but is typically approximately 0.2 mm when the filament number is 50K.

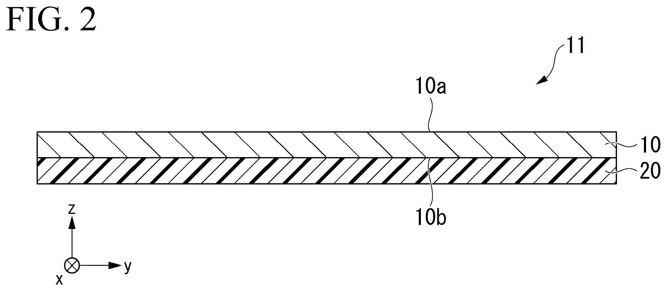

After the spread processing, spraying resin powder using a spray gun 120, heating using a heater 130, pressing using a nip roll 140, and cooling using a cooling roll 150 are sequentially performed, thereby forming a single-sided coated carbon fiber bundle 11 of which cross-sectional view is shown in Fig. 2.

The single-sided coated carbon fiber bundle 11 comprises the carbon fiber bundle 10 having one main surface 10a and another main surface 10b on the opposite side, and a resin film 20 formed on the one main surface 10b.

Heating by the heater 130 is performed for the purpose of melting the resin powder applied to the main surface 10b of the carbon fiber bundle.

Pressing by the nip roll 140 is performed for the purpose of making a resin constituting the resin film 20 permeate the carbon fiber bundle 10.

Cooling by the cooling roll 150 is performed for the purpose of solidifying the resin film 20 before the slitting step in the subsequent stage.

The resin film 20 may be cooled by blowing cooling air in place of or in addition to use of the cooling roll 150.

Either or both of the pressing by the nip roll 140 and the cooling by the cooling roll 150 may be omitted.

The purpose of forming the resin film on one surface of the spread carbon fiber bundle before slitting it is stabilizing the shape of the carbon fiber bundle and maintaining it in a spread state. In other words, the resin film is formed for the purpose of preventing the spread carbon fiber bundle from decrease in a bundle width and increase and uniformity reduction in a thickness during transportation to a slitter roll.

Formation of the resin film has also a purpose of stabilizing shapes of sub-bundles formed by slitting the carbon fiber bundle. There is an advantage that the sub-bundles are unlikely to be entangled with each other when the shapes of the sub-bundles are stable.

The effect of stabilizing the shape of the carbon fiber bundle by forming the resin film is particularly significant when the filament number is 40 K or more, that is, when the carbon fiber bundle is a so-called large tow. This is because a binding effect of a sizing agent contained in the carbon fiber bundle weakens as the filament number increases.

The resin film 20 may be a continuous film that completely covers the main surface 10b of the carbon fiber bundle 10, or may be a discontinuous film having an island structure or a network structure. When the resin film 20 is a discontinuous film, the main surface 10b of the carbon fiber bundle 10 is partially exposed.

It is advantageous that the resin film is the discontinuous film in terms of preventing occurrence of defective impregnation when the slit carbon fiber bundle manufactured from the single-sided coated carbon fiber bundle is used for manufacturing a prepreg.

The resin film 20 is not limited by the kind of a resin constituting the resin film 20. For example, one or more resins selected from polyamide, polyester, polyurethane, polyolefin, an epoxy resin, a phenol resin, a vinyl ester resin, and a silicone resin may be comprised in the resin film 20.

The resin film 20 may comprise a resin composition containing a component other than the resin.

The method for forming the resin film 20 is not limited to the method including spraying a resin powder. Various types of applicators such as a spray gun, a roll coater, and a die coater can be used when the resin film 20 is formed with a fusible resin.

The single-sided coated carbon fiber bundle 11 is fed to the slitter roll 170 and partially slit to form the slit carbon fiber bundle 12. The slit is formed to penetrate through the single-sided coated carbon fiber bundle 11 in a thickness direction, that is, to penetrate through both the carbon fiber bundle 10 and the resin film 20.

A slitting blade 171 provided on a circumferential surface 170a of the slitter roll 170 is provided with a missing part 172 for allowing partial slitting.

The single-sided coated carbon fiber bundle 11 comprising the carbon fiber bundle with a filament number of NK is partially split into n (n represents an integer of 2 or more) sub-bundles by partially slitting using the slitter roll 170 having (n-1) slitting blades 171 arranged along a rotation axis direction.

N/n is, for example, 10 or less, preferably 6 or less, more preferably 4 or less and may be 3 or less or 2 or less. N/n is preferably 0.5 or more and may be 1 or more. The above-described upper limit and lower limit can be arbitrarily combined. For example, N/n is preferably 0.5 to 6, more preferably 0.5 to 4, and still more preferably 0.5 to 3.

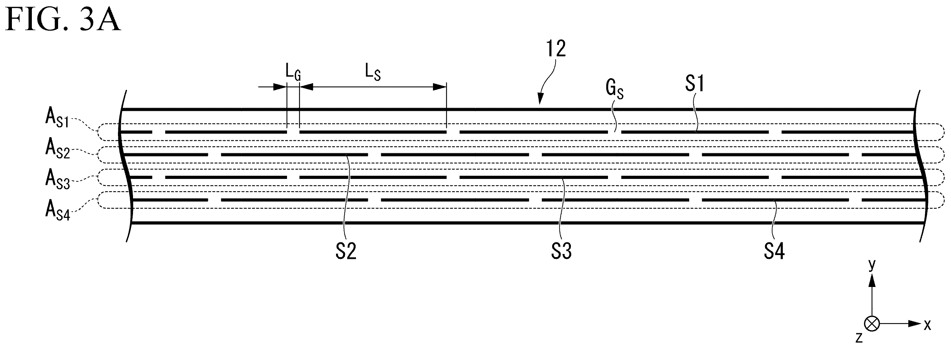

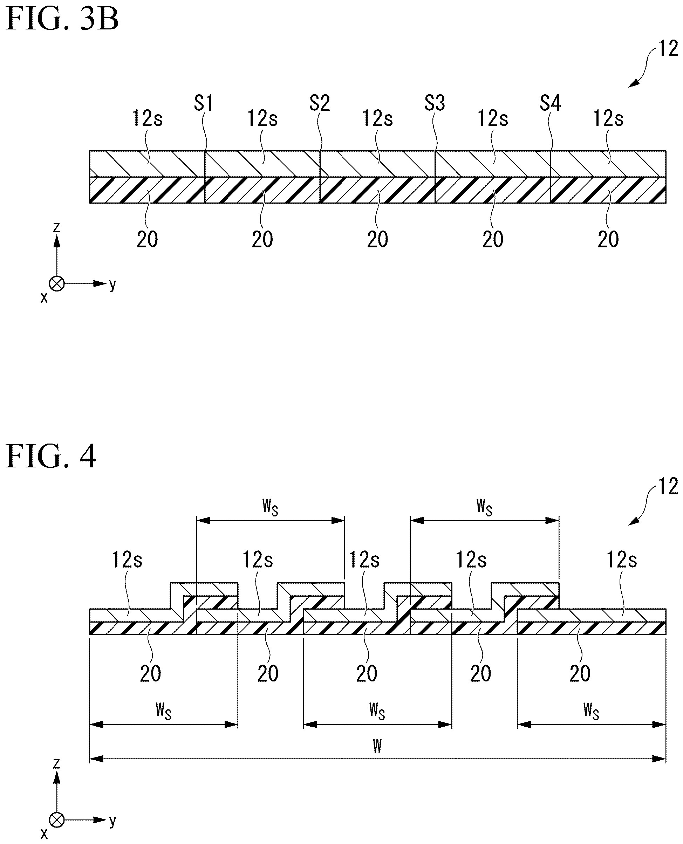

An example of a slit carbon fiber bundle comprising five sub-bundles obtained by partially slitting a single-sided coated carbon fiber bundle with a slitter roll having four slitting blades is shown in Figs. 3A and 3B.

When a fiber direction (longitudinal direction) is defined as an x-direction, a width direction is defined as a y-direction, and a thickness direction is defined as a z-direction, Fig. 3A is a plan view when the slit carbon fiber bundle 12 is viewed in the z-direction, and Fig. 3B is a cross-sectional view showing a cross section perpendicular to the x-direction (cross section in a yz-plane) of the slit carbon fiber bundle 12.

As shown in Fig. 3A, four slit rows of a first slit row A_{S1}, a second slit row A_{S2}, a third slit row A_{S3}, and a fourth slit row A_{S4} are formed in the slit carbon fiber bundle 12.

The first slit row A_{S1} consists of a plurality of first slits S1 arranged in the x-direction.

The second slit row A_{S2} consists of a plurality of second slits S2 arranged in the x-direction.

The third slit row A_{S3} consists of a plurality of third slits S3 arranged in the x-direction.

The fourth slit row A_{S4} consists of a plurality of fourth slits S4 arranged in the x-direction.

The four slit rows are formed by different slitting blades, and thus positions of the four slit rows in the y-direction are different from each other.

A slit length L_{S} and an inter-slit gap length L_{G} are constant in any of the slit rows and are common in different slit rows.

A ratio L_{S}/(L_{S} + L_{G}) of the slit length L_{S} to the sum of the slit length L_{S} and the inter-slit gap length L_{G} is usually 90% or more and preferably 95% or more, and may be, for example, 99%. Therefore, the slit carbon fiber bundle 12 is split into five sub-bundles 12s in most parts as shown in Fig. 3B.

Positions of the first slit row A_{S1}, the second slit row A_{S2}, the third slit row A_{S3}, and the fourth slit row A_{S4} in the y-direction are set such that the widths of the five sub-bundles 12s are approximately the same as each other.

The slit length L_{S} is not limited to, but is preferably more than 25 mm, more preferably more than 50 mm, and still more preferably more than 500 mm.

For example, the slit length L_{S} can be more than 25 mm and 50 mm or less, more than 50 mm and 100 mm or less, more than 100 mm and 200 mm or less, more than 200 mm and 500 mm or less, more than 500 mm and 1000 mm or less, more than 1000 mm and 1500 mm or less, more than 1500 mm and 2000 mm or less, or more than 2000 mm and 3000 mm or less.

The inter-slit gap length L_{G} is not limited to, but is, for example, in a range of 5 to 10 mm.

The slit length L_{S} and the inter-slit gap length L_{G} can be controlled by adjusting a feed speed of the single-sided coated carbon fiber bundle 11, a circumferential speed of the slitter roll 170, and lengths of the slitting blade 171 and the missing part 172 of the slitting blade in a circumferential direction.

For example, the slit length L_{S} can be set to be greater than the length of the slitting blade 171 in the circumferential direction by adjusting the feed speed of the single-sided coated carbon fiber bundle 11 higher than the circumferential speed of the slitter roll.

In the slit carbon fiber bundle 12 shown in Fig. 3A, positions of the inter-slit gaps G_{S} in the first slit row A_{S1} and the second slit row A_{S2} are shifted in the x-direction. The same applies between the second slit row A_{S2} and the third slit row A_{S3} and between the third slit row A_{S3} and the fourth slit row A_{S4}.

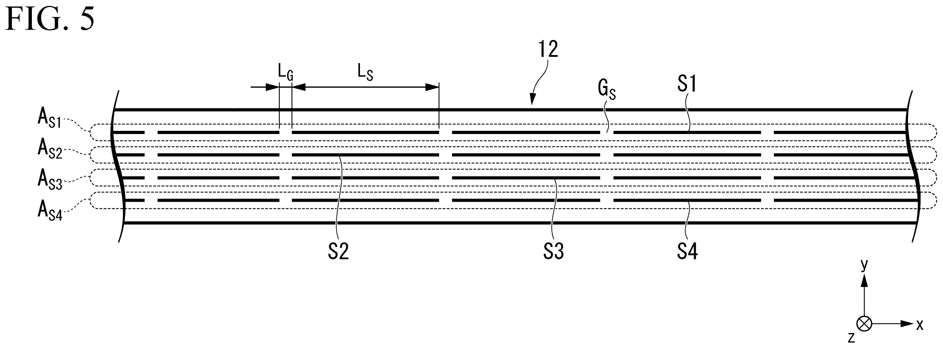

The configuration in which the positions of the inter-slit gaps G_{S} between the adjacent slit rows are shifted in the x-direction as described above is not essential. In one example, the positions of the inter-slit gaps G_{S} in the x-direction may be aligned between all the slit rows as shown in Fig. 5. In another example, the positions of the inter-slit gaps G_{S} in the x-direction may be shifted between all the slit rows.

What has been described above about the slit length L_{S}, the inter-slit gap length L_{G}, the ratio L_{S}/(L_{S} + L_{G}) of the slit length L_{S} to the sum of the slit length L_{S} and the inter-slit gap length L_{G}, and the position of the inter-slit gap G_{S} applies not only to the slit carbon fiber bundle comprising five sub-bundles but also to slit carbon fiber bundles comprising four or less or six or more sub-bundles.

The filament number of each sub-bundle 12s in the slit carbon fiber bundle 12 is preferably 6K or less, more preferably 4K or less, and still more preferably 3K or less, regardless of the number n. The filament number of each sub-bundle 12s in the slit carbon fiber bundle 12 is preferably 0.5K or more and more preferably 1K or more, regardless of the number n. The above-described upper limit and lower limit can be arbitrarily combined. For example, the filament number of each sub-bundle 12s in the slit carbon fiber bundle 12 is preferably in a range of 0.5K to 6K, more preferably in a range of 0.5K to 4K, and still more preferably in a range of 0.5K to 3K.

In the slitting of the single-sided coated carbon fiber bundle 11 using the slitter roll 170, the single-sided coated carbon fiber bundle may be fed while sliding on the circumferential surface 170a of the slitter roll by setting the feed speed of the single-sided coated carbon fiber bundle to be higher than the circumferential speed of the slitter roll, in order to form a slit that is longer than the length of the slitting blade 171 in the circumferential direction. At this time, it is preferable that the single-sided coated carbon fiber bundle 11 contacts the circumferential surface 170a of the slitter roll on a side where the resin film 20 has been formed, in order to prevent fuzzing resulting from breakage of a filament in the carbon fiber bundle 10 due to friction with the slitter roll 170. In other words, it is preferable that the slitting blade penetrates into the single-sided coated carbon fiber bundle 11 from the side of the resin film 20 not from the side of the carbon fiber bundle 10.

In an experiment conducted by the present inventors using a carbon fiber bundle with a filament number of 50K, an amount of a resin film to fall off during slitting was smaller when a slitting blade penetrated into a single-sided coated carbon fiber bundle from the side of a resin film as compared with when the slitting blade penetrated thereinto from the side of a carbon fiber bundle. The details are not clear, but it is considered that the resin film is pressed against the carbon fiber bundle on a slitter roll in the former case.

Further, when a carbon fiber mat was prepared from the slit carbon fiber bundle prepared in the experiment and observed, an amount of fluff contained in the carbon fiber mat was different depending on a direction in which the slitting blade penetrated into the single-sided coated carbon fiber bundle in the preparation of the slit carbon fiber bundle. More specifically, when the slitting blade penetrated into the single-sided coated carbon fiber bundle from the side of the resin film in the slitting, the amount of fluff contained in the carbon fiber mat prepared by using the obtained slit carbon fiber bundle was smaller as compared with when the slitting blade penetrated thereinto from the side of the carbon fiber bundle.

**In** the experiment described above, a single-sided coated carbon fiber bundle was prepared by spreading a carbon fiber bundle to have a width of approximately 25 mm, coating one surface thereof with an epoxy resin using a spray gun, and making a part of the epoxy resin permeate into the carbon fiber bundle by allowing the carbon fiber bundle passing through a nip roll heated to 150°C. The used epoxy resin was a bisphenol A type epoxy resin [jER (registered trademark) 1002, manufactured by Mitsubishi Chemical Corporation] having an epoxy equivalent of 600 to 700, a number average molecular weight of approximately 1200, and a softening point of 78°C (ring and ball method). The amount of the epoxy resin adhered to the carbon fiber bundle in this processing was approximately 7% by weight of the single-sided coated carbon fiber bundle. A plurality of slitting blades were provided with a pitch of 0.85 mm in an axial direction on a circumferential surface of a slitter roll used in the slitting. Each slitting blade had one missing part on its outer circumference. In each slit row formed in the single-sided coated carbon fiber bundle by the slitting, the slit length was approximately 700 mm, and the inter-slit gap length was approximately 10 mm.

The carbon fiber mat was prepared by cutting the prepared slit carbon fiber bundle with a chopper to form a chopped carbon fiber bundle such that a fiber length thereof is 25 mm, bringing the chopped carbon fiber bundle into contact with a rotating pin roll, and subsequently dropping the chopped carbon fiber bundle on a resin film. The circumferential speed of the pin roll was approximately 400 m/min at the tip of a pin.

The slit carbon fiber bundle 12 obtained by partially slitting the single-sided coated carbon fiber bundle 11 is wound on a bobbin B2. The bobbin B2 is, for example, a paper tube, but is not limited thereto.

It is preferable that the slit carbon fiber bundle 12 is traverse-wound on the bobbin B2 using a traverse device (not shown). In the traverse-winding, a lead angle at the start of the winding can be set to, for example, 5° to 30°, and the lead angle at the end of the winding can be set to, for example, 2° to 17°, but the lead angles are not limited thereto. A winding ratio in the traverse-winding is usually not set to an integer, and it is preferable that the fraction after the decimal point of the winding ratio is also not set to a multiple of 1/2, 1/3, 1/4, and 1/5.

It is preferable that the slit carbon fiber bundle 12 is wound on the bobbin such that no gap is present between the sub-bundles 12s. The reason is to prevent the sub-bundles 12s from biting each other between a part wound first on the bobbin B2 and a part later wound thereon in an overlapping manner. When the winding is made such that no gap is present between the sub-bundles 12s, it is possible to suppress the sub-bundles from biting each other, and entanglement of the slit carbon fiber bundle 12 and breakage of the sub-bundles 12s can therefore be prevented when the slit carbon fiber bundle is unwound by external or internal unwinding.

A total width W of the slit carbon fiber bundle 12 may be set to be less than a sum of widths Wₛ of the sub-bundles as shown in Fig. 4, in order to wind the slit carbon fiber bundle 12 on the bobbin such that no gap is present between the sub-bundles 12s.

Fig. 4 is a cross-sectional view when the slit carbon fiber bundle 12 on the bobbin is cut perpendicularly to the fiber direction, showing that the five sub-bundles 12s are arranged without any gap in the y-direction. That is, there is no part where the adjacent sub-bundles 12s are apart from each other, and each sub-bundle 12s overlaps the sub-bundle 12s next to it at the edge.

The slit carbon fiber bundle 12 can be wound on the bobbin B2 in a state where the total width W is less than the sum of the widths Wₛ of the sub-bundles by using a grooved roll having a groove width smaller than the sum of the widths of the sub-bundles as a guide roll or adjusting the guide width of the traverse device to be smaller than the sum of the widths of the sub-bundles.

When the total width of the slit carbon fiber bundle is decreased by these methods, not only does the sub-bundles overlap each other, but some of the sub-bundles may be folded in the width direction. Therefore, a state of mutual overlapping between the sub-bundles in the slit carbon fiber bundle wound on the winding bobbin is not limited to that shown in Fig. 4, but can be various.

In order to reliably prevent a gap from being generated between the sub-bundles, the total width of the slit carbon fiber bundle when wound on the winding bobbin is set to preferably 90% or less of the sum of the widths of the sub-bundles and more preferably 80% or less thereof.

In the above-described experiment, the slit carbon fiber bundle, which was obtained by slitting the single-sided coated carbon fiber bundle having a width of 25 mm, was wound on a bobbin such that a total width thereof became approximately 13 mm, and the slit carbon fiber bundle was unwound and used to prepare the carbon fiber mat. When the slit carbon fiber bundle was unwound, entanglement of the slit carbon fiber bundle or breakage of the sub-bundles did not occur.

The slit carbon fiber bundle 12 can be preferably used as a material for SMC.

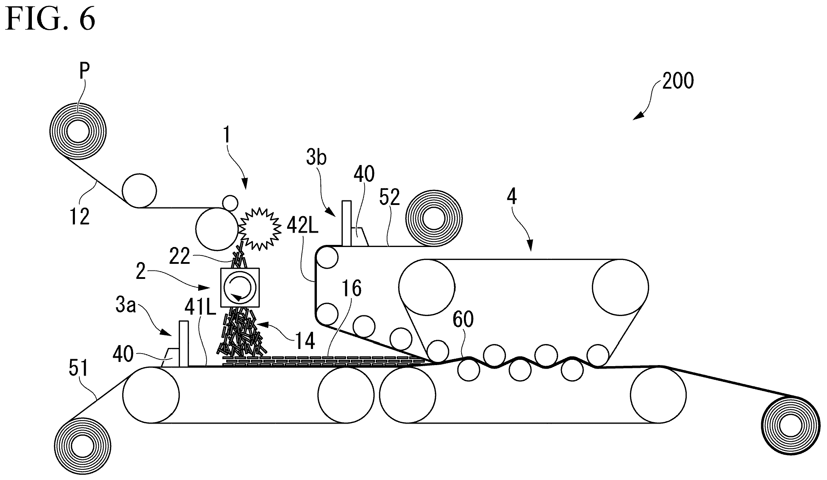

For example, an SMC manufacturing apparatus shown in Fig. 6 can be used for manufacturing SMC using the slit carbon fiber bundle 12.

As shown in Fig. 6, the SMC manufacturing apparatus includes a chopper 1, a disperser 2, a first applicator 3a, a second applicator 3b, and an impregnation machine 4.

The slit carbon fiber bundle 12 is drawn out from a carbon fiber package P and sent to the chopper 1.

The slit carbon fiber bundle 12 is cut by the chopper 1, thereby forming a chopped carbon fiber bundle 14.

The fiber length of the chopped carbon fiber bundle 14 is, for example, within a range of 5 mm to 100 mm and typically 1.3 cm (approximately 1/2 inches), 2.5 cm (approximately 1 inch), or the like.

The chopped carbon fiber bundle 14 falls on a first carrier film 51 travelling below the chopper while being dispersed by the disperser 2 having one or more rotating body. A carbon fiber mat 16 is deposited on the first carrier film 51.

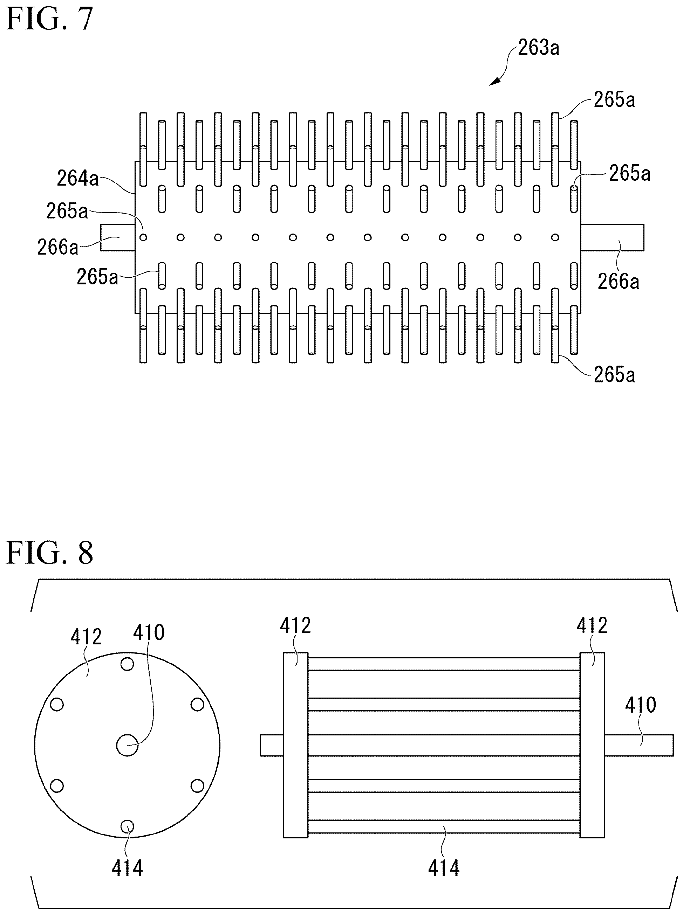

A pin roll 263a shown in Fig. 7 is an example of the rotating body of the disperser 2. A structural body in which a pair of disks 412 are connected with a plurality of wires or rods 414 as shown in Fig. 8 is another example of the rotating body of the disperser 2.

The surface of the first carrier film 51 is coated with a resin paste layer 41 comprising thermosetting resin paste 40 by the first applicator 3a before the deposition of the carbon fiber mat 16.

The surface of a second carrier film 52 is also coated with a resin paste layer 42 comprising the thermosetting resin paste 40 by the second applicator 3b.

Both the first carrier film 51 and the second carrier film 52 are synthetic resin films and comprises, for example, polyolefin.

Subsequent to the formation of the carbon fiber mat 16, a laminate 60 is formed by laminating the first carrier film 51 and the second carrier film 52 such that the resin paste layer respectively applied to the first carrier film and the second carrier film and the carbon fiber mat 16 are sandwiched therebetween.

The carbon fiber mat 16 is impregnated with the thermosetting resin paste 40 by pressing the laminate 60 with the impregnation machine 4.

The laminate 60 having passed through the impregnation machine 4 is wound on a bobbin.

Processing up to this point is performed by the SMC manufacturing apparatus shown in Fig. 1.

The laminate 60 on the bobbin is heated to a predetermined temperature and maintained for a certain period of time in order to further thicken the thermosetting resin paste 40 that has permeated into the carbon fiber mat 16, as necessary.

In another example, the slitting device 100 may be connected inline to the SMC manufacturing apparatus. That is, the slit carbon fiber bundle 12 manufactured by the slitting device 100 may be provided for manufacturing SMC without being wound on the bobbin even once.

### [Reference Signs List]

1: Chopper
10: Carbon fiber bundle
11: Single-sided coated carbon fiber bundle
12: Slit carbon fiber bundle
12s: Sub-bundle
14: Chopped carbon fiber bundle
100: Slitting device
110: Spreader bar
120: Sprayer
130: Heater
140: Nip roll
150: Cooling roll
160: Guide roll
170: Slitter roll
170a: Circumferential surface
171: Slitting blade
172: Missing part
180: Godet roll
2: Disperser
20: Resin film
200: SMC manufacturing apparatus
263a: Pin roll
264a: Cylinder
265a: Pin
266a: Rotation axis
3a: First applicator
3b: Second applicator
4: Impregnation machine
410: Rotation axis
412: Disk
414: Wire or rod

## Claims

1. A carbon fiber package (P) in which a slit carbon fiber bundle (12), which has been split into sub-bundles (12s) by partial slitting, is traverse-wound on a bobbin (B2),
wherein the slit carbon fiber bundle has been prepared by partially slitting a single-sided coated carbon fiber bundle (11) comprising a flat carbon fiber bundle (10) and a resin film (20) formed on one surface (10b) of the flat carbon fiber bundle;
**characterized in that**
a width (W) of the slit carbon fiber bundle on the bobbin is less than a sum of widths (Ws) of the sub-bundles.

2. The carbon fiber package according to Claim 1,
wherein the slit carbon fiber bundle is wound on the bobbin such that no gap is present between the sub-bundles.

3. The carbon fiber package according to Claim 1 or 2,
wherein the resin film is a discontinuous film.

4. The carbon fiber package according to any one of 1 to 3,
wherein the resin film comprises one or more resins selected from polyamide, polyester, polyurethane, polyolefin, an epoxy resin, a phenol resin, a vinyl ester resin, and a silicone resin.

5. A method for manufacturing a carbon fiber package (P), comprising:
traverse-winding a slit carbon fiber bundle (12), which has been split into sub-bundles (12s) by partial slitting, on a bobbin (B2),
wherein the slit carbon fiber bundle has been prepared by partially slitting a single-sided coated carbon fiber bundle (11) comprising a flat carbon fiber bundle (10) and a resin film (20) formed on one surface (10b) of the flat carbon fiber bundle;
**characterized in that**
the slit carbon fiber bundle is wound on the bobbin such that a width (W) of the slit carbon fiber bundle on the bobbin is less than a sum of widths (Ws) of the sub-bundles.

6. The manufacturing method according to Claim 5,
wherein the slit carbon fiber bundle is wound on the bobbin such that no gap is present between the sub-bundles.

7. The manufacturing method according to Claim 5 or 6,
wherein the resin film is a discontinuous film.

8. The manufacturing method according to any one of Claims 5 to 7,
wherein a filament number of the flat carbon fiber bundle is 12K or more and may be 100K or less.

9. The manufacturing method according to Claim 8,
wherein the filament number of the flat carbon fiber bundle is 40K or more.

10. The manufacturing method according to any one of Claims 5 to 9,
wherein when a filament number of the flat carbon fiber bundle is NK, and the number of the sub-bundles is n, N/n is 10 or less.

11. The manufacturing method according to Claim 10,
wherein N/n is 0.5 or more.

12. The manufacturing method according to any one of Claims 5 to 11,
wherein the resin film comprises one or more resins selected from polyamide, polyester, polyurethane, polyolefin, an epoxy resin, a phenol resin, a vinyl ester resin, and a silicone resin.

## Patentansprüche

1. Kohlenstofffaserpaket (P), bei dem ein geschlitztes Kohlenstofffaserbündel (12), das durch teilweises Schlitzen in Teilbündel (12s) aufgeteilt wurde, quer auf eine Spule (B2) aufgewickelt wird,
wobei das geschlitzte Kohlenstofffaserbündel durch teilweises Schlitzen eines einseitig beschichteten Kohlenstofffaserbündels (11) vorbereitet wurde, das ein flaches Kohlenstofffaserbündel (10) und einen auf einer Oberfläche (10b) des flachen Kohlenstofffaserbündels gebildeten Harzfilm (20) umfasst; **dadurch gekennzeichnet, dass**
eine Breite (W) des geschlitzten Kohlenstofffaserbündels auf der Spule kleiner ist als die Summe der Breiten (Ws) der Teilbündel.

2. Kohlenstofffaserpaket nach Anspruch 1,
wobei das geschlitzte Kohlenstofffaserbündel so auf die Spule gewickelt ist, dass zwischen den Teilbündeln kein Spalt vorhanden ist.

3. Kohlenstofffaserpaket nach Anspruch 1 oder 2,
wobei der Harzfilm ein diskontinuierlicher Film ist.

4. Kohlenstofffaserpaket nach einem der Ansprüche 1 bis 3,
wobei der Harzfilm ein oder mehrere Harze umfasst, die aus Polyamid, Polyester, Polyurethan, Polyolefin, einem Epoxidharz, einem Phenolharz, einem Vinylesterharz und einem Silikonharz ausgewählt sind.

5. Verfahren zur Herstellung eines Kohlenstofffaserpakets (P), umfassend:
Queraufwickeln eines geschlitzten Kohlenstofffaserbündels (12), das durch teilweises Schlitzen in Teilbündel (12s) aufgeteilt wurde, auf eine Spule (B2),
wobei das geschlitzte Kohlenstofffaserbündel durch teilweises Schlitzen eines einseitig beschichteten Kohlenstofffaserbündels (11) vorbereitet wurde, das ein flaches Kohlenstofffaserbündel (10) und einen auf einer Oberfläche (10b) des flachen Kohlenstofffaserbündels gebildeten Harzfilm (20) umfasst;
**dadurch gekennzeichnet, dass**
das geschlitzte Kohlenstofffaserbündel so auf die Spule aufgewickelt ist, dass eine Breite (W) des geschlitzten Kohlenstofffaserbündels auf der Spule kleiner ist als die Summe der Breiten (Ws) der Teilbündel.

6. Herstellungsverfahren nach Anspruch 5,
wobei das geschlitzte Kohlenstofffaserbündel so auf die Spule gewickelt ist, dass zwischen den Teilbündeln kein Spalt vorhanden ist.

7. Herstellungsverfahren nach Anspruch 5 oder 6,
wobei der Harzfilm ein diskontinuierlicher Film ist.

8. Herstellungsverfahren nach einem der Ansprüche 5 bis 7,
wobei die Filamentanzahl des flachen Kohlenstofffaserbündels 12K oder mehr beträgt und 100K oder weniger betragen kann.

9. Herstellungsverfahren nach Anspruch 8,
wobei die Filamentanzahl des flachen Kohlenstofffaserbündels 40K oder mehr beträgt.

10. Herstellungsverfahren nach einem der Ansprüche 5 bis 9,
wobei, wenn die Filamentanzahl des flachen Kohlenstofffaserbündels NK ist und die Anzahl der Teilbündel n ist, N/n 10 oder weniger ist.

11. Herstellungsverfahren nach Anspruch 10,
wobei N/n 0,5 oder mehr ist.

12. Herstellungsverfahren nach einem der Ansprüche 5 bis 11,
wobei der Harzfilm ein oder mehrere Harze umfasst, die aus Polyamid, Polyester, Polyurethan, Polyolefin, einem Epoxidharz, einem Phenolharz, einem Vinylesterharz und einem Silikonharz ausgewählt sind.

## Revendications

1. Enroulement de fibres de carbone (P) dans lequel un faisceau de fibres de carbone avec fente (12), qui a été divisé en sous-faisceaux (12s) par une division partielle, est enroulé de manière transversale sur une bobine (B2),
dans lequel le faisceau de fibres de carbone avec fente a été préparé en divisant partiellement un faisceau de fibres de carbone revêtu d'un seul côté (11) comprenant un faisceau de fibres de carbone plat (10) et un film de résine (20) formé sur une surface (10b) du faisceau de fibres de carbone plat ; **caractérisé en ce que**
une largeur (W) du faisceau de fibres de carbone avec fente sur la bobine est inférieure à une somme de largeurs (Ws) des sous-faisceaux.

2. Enroulement de fibres de carbone selon la revendication 1,
dans lequel le faisceau de fibres de carbone avec fente est enroulé sur la bobine de sorte qu'aucun espace ne soit présent entre les sous-faisceaux.

3. Enroulement de fibres de carbone selon la revendication 1 ou 2,
dans lequel le film de résine est un film discontinu.

4. Enroulement de fibres de carbone selon l'une quelconque des revendications 1 à 3,
dans lequel le film de résine comprend une ou plusieurs résines sélectionnées parmi polyamide, polyester, polyuréthane, polyoléfine, une résine époxy, une résine phénol, une résine vinylester, et une résine silicone.

5. Procédé de fabrication d'un enroulement de fibres de carbone (P), comprenant :
l'enroulement transversal d'un faisceau de fibres de carbone avec fente (12), qui a été divisé en sous-faisceaux (12s) par une division partielle, sur une bobine (B2),
dans lequel le faisceau de fibres de carbone avec fente a été préparé en divisant partiellement un faisceau de fibres de carbone revêtu d'un seul côté (11) comprenant un faisceau de fibres de carbone plat (10) et un film de résine (20) formé sur une surface (10b) du faisceau de fibres de carbone plat ;
**caractérisé en ce que**
le faisceau de fibres de carbone avec fente est enroulé sur la bobine de sorte qu'une largeur (W) du faisceau de fibres de carbone avec fente sur la bobine soit inférieure à une somme de largeurs (Ws) des sous-faisceaux.

6. Procédé de fabrication selon la revendication 5,
dans lequel le faisceau de fibres de carbone avec fente est enroulé sur la bobine de sorte qu'aucun espace ne soit présent entre les sous-faisceaux.

7. Procédé de fabrication selon la revendication 5 ou 6,
dans lequel le film de résine est un film discontinu.

8. Procédé de fabrication selon l'une quelconque des revendications 5 à 7,
dans lequel un nombre de filaments du faisceau de fibres de carbone plat est 12K ou plus et
peut être 100K ou moins.

9. Procédé de fabrication selon la revendication 8,
dans lequel le nombre de filaments du faisceau de fibres de carbone plat est 40K ou plus.

10. Procédé de fabrication selon l'une quelconque des revendications 5 à 9,
dans lequel lorsqu'un nombre de filaments du faisceau de fibres de carbone plat est NK, et le nombre des sous-faisceaux est n, N/n est 10 ou moins.

11. Procédé de fabrication selon la revendication 10,
dans lequel N/n est 0,5 ou plus.

12. Procédé de fabrication selon l'une quelconque des revendications 5 à 11,
dans lequel le film de résine comprend une ou plusieurs résines sélectionnées parmi polyamide, polyester, polyuréthane, polyoléfine, une résine époxy, une résine phénol, une résine vinylester, et une résine silicone.
